# EUROPEAN PATENT APPLICATION

(11) **EP 2 527 890 A1**
(43) Date of publication of application: **28.11.2012**
(21) Application number: 11167489.1
(22) Date of filing: 25.05.2011
(51) Int. Cl.: G02B 6/00

(54) **Backlight module with three-dimensional circuit structure**

(71) Applicant: Kocam International Co., Ltd., New Taipei City 241 (TW)
(72) Inventor: Chen, Tsan-Jung, 241 New Taipei City, Taipei (TW)
(74) Representative: Harrison, Robert John

(57) **Abstract**

The present invention relates to a backlight module with three-dimensional circuit structure, comprising: a housing, a thermal conductive material, a three-dimensional circuit module, a plurality of light-emitting devices, a reflective layer, a light guide plate, and a thermal conductive layer, wherein a main body of the three- dimensional circuit module has a plurality of concave holes in the surface thereof, and a three-dimensional circuit layer is disposed on the surface of the main body, the side walls of the plurality of concave holes, and the bottoms of the concave holes; in addition, the light-emitting devices are respectively disposed in the concave holes by way of being welded on the welding points; Therefore, the complete circuit can be disposed in the limit-sized main body, so that, the backlight module with three-dimensional circuit structure can be applied to a thin liquid crystal display device.

## Description

### BACKGROUND OF THE INVENTION

### 1. Technical Field

The present invention relates to a backlight module, and more particularly, to a backlight module with three-dimensional circuit structure.

### 2. Description of Related Art

Recently, light-emitting diode (LED) is widely applied in illumination apparatuses. Because LED would get very hot when it is emitting, a conventional LED illumination apparatus commonly includes radiation materials or heat-dissipating device.

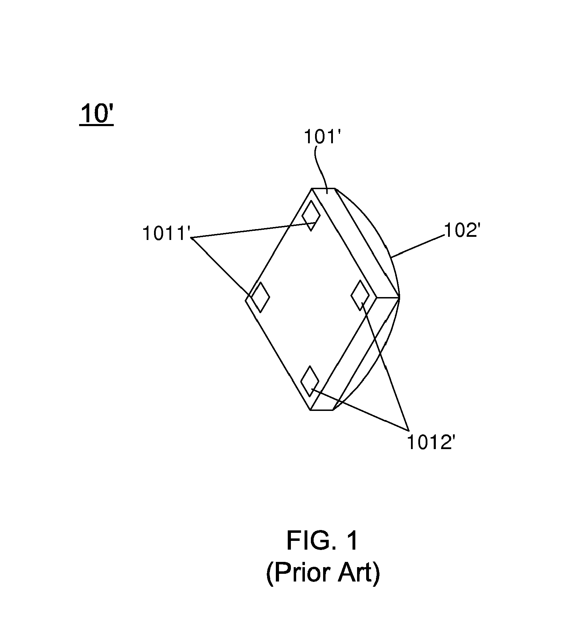

Please refer to FIG. 1, which illustrates a stereo view of a conventional LED device. As shown in FIG. 1, conventional LED device 10' includes: a substrate 101' and a plastic body 102' ,wherein at least one LEDchip is disposed on the surface of the substrate 101'; moreover, opposite to the LED chip, a plurality of metal pins are disposed on the another surface of the substrate 101'. The plurality of metal pins includes: two positive electrodes 1011' and two negative electrodes 1012'.

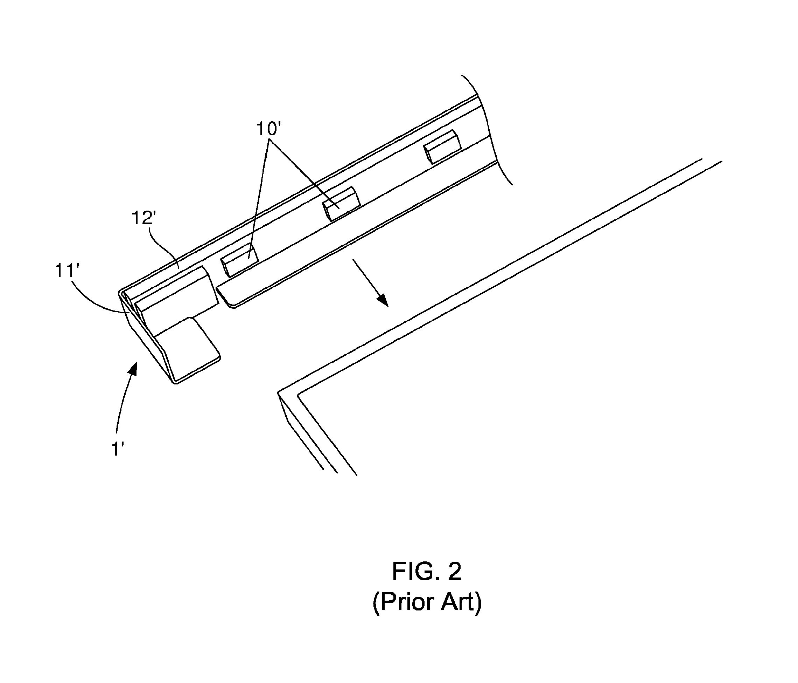

Continuously referring to FIG. 1, and simultaneously referring to FIG. 2, which illustrates a stereo diagram of a conventional LED backlight module. As shown in FIG. 2, the conventional LED backlight module 1' is installed in a main frame of a liquid crystal display device, used for providing a backlight to a light guide plate (not shown in FIGs.). The conventional LED backlight module 1' includes: a housing 11', a printed circuit board 12' and a plurality of LED devices 10'. The LED devices 10' are mounted on the printed circuit board 12', moreover, the printed circuit board 12' and the LED devices 10' are accommodated by the housing 11". In addition, an electronic circuit is printed on the printed circuit board 12', wherein the electronic circuit has a plurality of welding points for soldering the LED devices 10'.

The aforesaid LED backlight module 1' has two advantages: (1) simple structure; and (2) easy to be installed in the main frame. Thus, the LED backlight module 1' is widely applied in various liquid crystal display devices for providing the backlight to the light guide plate. However, with the change in user habits, it is requested to be manufactured as a thin liquid crystal display device regardless of the large-sized liquid crystal display device or the small-sized liquid crystal display device. However, for the LED backlight module applied in the thin liquid crystal display device, it must face a great challenge, i.e., the complete and complex electronic circuit must be printed on a limit-sized printed circuit board.

Accordingly, for solving the great challenge, some backlight module manufactures propose the concept of folded printed circuit board, in which the complete electronic circuit is printed on a foldable printed circuit board, and then the foldable printed circuit board is folded and disposed in the housing; thus, the great challenge is be solved. However, the concept of folded printed circuit board still has two shortcomings and drawbacks: (1) the foldable printed circuit board can not be steadily disposed and fixed in the housing; and (2) the foldable printed circuit board can not completely insulated from the LED device.

Thus, in view of the conventional LED backlight module still has shortcomings and drawbacks, the inventor of the present application has made great efforts to make inventive research thereon and eventually provided a backlight module with three-dimensional circuit structure.

### BRIEF SUMMARY OF THE INVENTION

The first objective of the present invention is to provide a backlight module with three-dimensional circuit structure, in which a plurality of concave holes are formed in a main body and a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer; so that, the complete circuit can be disposed in the limit-sized main body, such that the backlight module with three-dimensional circuit structure can be applied to a thin liquid crystal display device.

Accordingly, to achieve the first objective of the present invention, the inventor proposes a backlight module with three-dimensional circuit structure, comprising:
a housing;
a thermal conductive material, disposed on the inner surface of the housing;
a three-dimensional circuit module, disposed in the housing via the thermal conductive material and comprising: a main body, having a plurality of concave holes formed in a first surface thereof; and a three-dimensional circuit layer, disposed on the first surface of the main body, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the housing, used for receiving the light emitted by the light-emitting devices; and
a thermal conductive layer, being attached to the outer surface of the bottom of the housing;
wherein when the light-emitting devices emit, the heat produced by the light-emitting devices can be transferred to the housing via the main body of the three-dimensional circuit module, and furthermore, the heat can be dissipated through the housing and the thermal conductive layer.

The second objective of the present invention is to provide a backlight module with three-dimensional circuit structure, in which a groove is formed on a main body and a plurality of spacers are disposed in the groove for forming a plurality of concave holes, and then a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer; so that, the complete circuit can be disposed in the limit-sized main body, such that the backlight module with three-dimensional circuit structure can be applied to a thin liquid crystal display device.

Thus, to achieve the second objective of the present invention, the inventor proposes a backlight module with three-dimensional circuit structure, comprising;
a housing;
a thermal conductive material, disposed on the inner surface of the housing;
a three-dimensional circuit module, disposed in the housing via the thermal conductive material and comprising: a main body, having a groove formed on a first surface thereof and a plurality of spacers disposed in the groove, wherein two adjacent spacers in the groove form one concave hole; and a three-dimensional circuit layer, disposed on the first surface of the main body, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, opposite to the reflective layer and disposed in the housing, used for receiving the light emitted by the light-emitting devices; and
a thermal conductive layer, attached to the outer surface of the bottom of the housing;
wherein when the light-emitting devices emit, the heat produced by the light-emitting devices can be transferred to the housing via the main body of the three-dimensional circuit module, and furthermore, the heat can be dissipated through the housing and the thermal conductive layer.

The third objective of the present invention is to provide a backlight module with three-dimensional circuit structure, in which a three-dimensional circuit module is used as a backlight module and is directly disposed in a main frame of a liquid crystal display device, wherein a plurality of concave holes are formed in a main body of the three-dimensional circuit module and a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer; so that, the complete circuit can be disposed in the limit-sized main body, such that the backlight module with three-dimensional circuit structure can be applied to a thin liquid crystal display device.

So that, to achieve the third objective of the present invention, the inventor proposes a backlight module with three-dimensional circuit structure, comprising:
a three-dimensional circuit module, capable of being directly disposed in a main frame of a liquid crystal display device, and comprising: a main body, having a plurality of concave holes formed in a first surface thereof; and a three-dimensional circuit layer, disposed on the first surface of the main body, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the housing and having a plurality of holes, wherein the reflective layer is opposite to the light-emitting devices, so that the light-emitting surfaces of the light-emitting devices are able to be exposed out of the reflective layer through the plurality of holes, respectively; and
a light guide plate, opposite to the reflective layer and disposed in the housing, used for receiving the light emitted by the light-emitting devices.

The fourth objective of the present invention is to provide a backlight module with three-dimensional circuit structure, in which a three-dimensional circuit module is used as a backlight module and is directly disposed in a main frame of a liquid crystal display device, wherein groove is formed in a main body of the three-dimensional circuit module and a plurality of spacers are disposed in the groove for formed a plurality of concave holes, and then a three-dimensional circuit layer is disposed on the surface of the main body, the side walls of the concave holes and the bottoms of the concave holes; moreover, a plurality of light-emitting devices are respectively disposed in the concave holes by way of a plurality of welding points of the three-dimensional circuit layer; so that, the complete circuit can be disposed in the limit-sized main body, such that the backlight module with three-dimensional circuit structure can be applied to a thin liquid crystal display device.

Thus, to achieve the fourth objective of the present invention, the inventor proposes a backlight module with three-dimensional circuit structure, comprising:
a three-dimensional circuit module, capable of being directly disposed in a main frame of a liquid crystal display device, and comprising: a main body, having a groove formed on a first surface thereof and a plurality of spacers disposed in the groove, wherein two adjacent spacers in the groove form one concave hole; and
a three-dimensional circuit layer, disposed on the first surface of the main body, the side walls of the concave holes and the bottoms of the concave holes, moreover, the three-dimensional circuit layer further has a plurality of welding points disposed on the bottoms of the concave holes;
a plurality of light-emitting devices, respectively disposed in the concave holes by way of being welded on the welding points;
a reflective layer, disposed in the housing and having a plurality of holes, wherein the reflective layer is opposite to the light-emitting devices, so that the light-emitting surfaces of the light-emitting devices are able to be exposed out of the reflective layer through the plurality of holes, respectively; and
a light guide plate, opposite to the reflective layer and disposed in the housing, used for receiving the light emitted by the light-emitting devices.

### BRIEF DESCRIPTION OF THE SEVERAL VIEWS OF THE DRAWINGS

The invention as well as a preferred mode of use and advantages thereof will be best understood by referring to the following detailed description of an illustrative embodiment in conjunction with the accompanying drawings, wherein:
FIG. 1 is a stereo view of a conventional LED device;
FIG. 2 is a stereo diagram of a conventional LED backlight module;
FIG. 3A is a first side view of a first embodiment of a backlight module with three-dimensional circuit structure according to the present invention;
FIG. 3B is a second side view of the first embodiment of the backlight module with three-dimensional circuit structure;
FIG. 4 is the stereo diagram of a three-dimensional circuit module, a plurality of light-emitting device and a reflective layer of the first embodiment of the backlight module with three-dimensional circuit structure;
FIG. 5A and FIG. 5B are schematic processing diagrams of forming a three-dimensional circuit layer on a main body of the three-dimensional circuit module;
FIG. 6 is a side view of a second embodiment of the backlight module with three-dimensional circuit structure according to the present invention;
FIG. 7 is an exploded diagram of a three-dimensional circuit module of the second embodiment of the backlight module with three-dimensional circuit structure;
FIG. 8 is the stereo diagram of a three-dimensional circuit module, a plurality of light-emitting device and a reflective layer of the second embodiment of the backlight module with three-dimensional circuit structure;
FIG. 9 is a side view of a third embodiment of the backlight module with three-dimensional circuit structure according to the present invention;
FIG. 10A is a first stereo diagram of a three-dimensional circuit module, a plurality of light-emitting device and a reflective layer of the third embodiment of the backlight module with three-dimensional circuit structure;
FIG. 10B is a second stereo diagram of the three-dimensional circuit module, the plurality of light-emitting device and the reflective layer of the third embodiment of the backlight module with three-dimensional circuit structure;
FIG. 11A is a side view of a fourth embodiment of the backlight module with three-dimensional circuit structure according to the present invention;
FIG. 11B is a second side view of the fourth embodiment of the backlight module with three-dimensional circuit structure according to the present invention; and
FIG. 11C is a third side view of the fourth embodiment of the backlight module with three-dimensional circuit structure according to the present invention.

### DETAILED DESCRIPTION OF THE INVENTION

To more clearly describe a backlight module with three-dimensional circuit structure according to the present invention, embodiments of the present invention will be described in detail with reference to the attached drawings hereinafter.

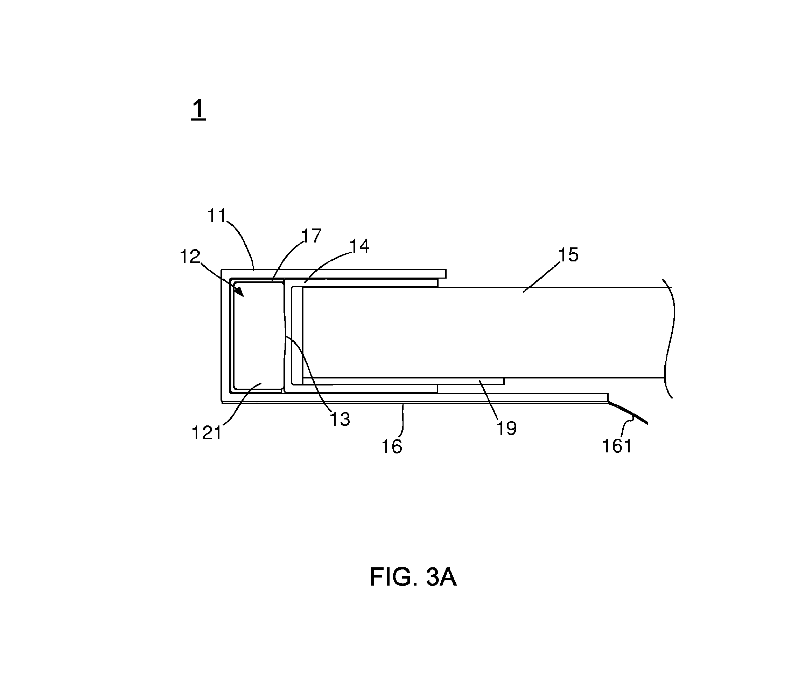

The present invention provides multi embodiments for describing the backlight module with three-dimensional circuit structure, please refer to FIG. 3A, which illustrates a first side view of a first embodiment of the backlight module with three-dimensional circuit structure according to the present invention. As shown in FIG. 3A, the backlight module 1 with three-dimensional circuit structure includes: a housing 11, a thermal conductive material 17, a three-dimensional circuit module 12, a plurality of light-emitting devices 13, a reflective layer 14, a light guide plate 15, a thermal conductive layer 16, and a bottom reflector 19, wherein the manufacture material of the housing 11 can be copper, aluminum, electrolytic zinc steel plate, or hot-dip galvanization steel plate, and the shape of the housing 11 can be 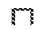 shape and L shape.

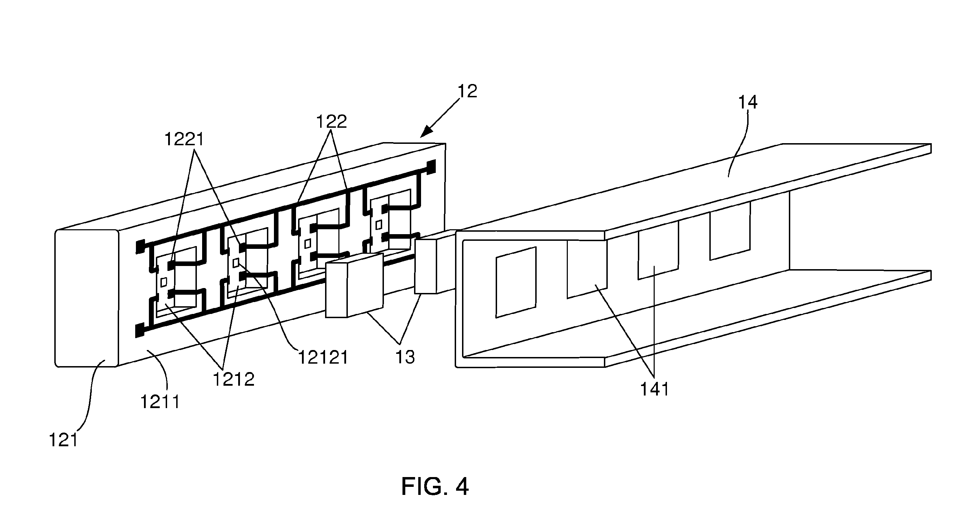

Continuously referring to FIG. 3A, and simultaneously referring to FIG. 4, which illustrates a stereo diagram of the three-dimensional circuit module, the plurality of light-emitting device and the reflective layer of the first embodiment of the backlight module with three-dimensional circuit structure. As shown in FIG. 3A and FIG. 4, the thermal conductive material 17 is disposed on the inner surface of the housing 11, and the three-dimensional circuit module 12 is disposed in the housing 11 via the thermal conductive material 17, the three-dimensional circuit module 12 includes a main body 121 and a three-dimensional circuit layer 122, wherein the main body 121 has a plurality of concave holes 1212 formed in a first surface 1211 thereof. The three-dimensional circuit layer 122 is disposed on the first surface 1211 of the main body 121, the side walls of the concave holes 1212 and the bottoms of the concave holes 1212, moreover, the three-dimensional circuit layer 122 further has a plurality of welding points 1221 disposed on the bottoms of the concave holes 1212.

As shown in FIG. 3A and FIG. 4, the light-emitting device 13 can be packaged-type LED chip and COB-type LED chip, and the plurality of light-emitting devices 13 are respectively disposed in the concave holes 1212 by way of being welded on the welding points 1221. The reflective layer 14 is disposed in the housing 11 and has a plurality of holes 141, wherein the reflective layer 14 is opposite to the light-emitting devices 13, so that the light-emitting surfaces of the light-cmitting devices 13 are able to be exposed out of the reflective layer 14 through the plurality of holes 141, respectively; Moreover, the reflective layer 14 can be formed in the housing 11 by coating process, painting process and spraying process, or, the reflective layer 14 can be a reflector and be disposed in the housing 11 after being bent as a 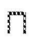 -shaped reflector or an L-shaped reflector, and one end of the 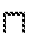 -shaped reflector or the L-shaped reflector has a reflector tassel, used for tightly attaching to the light guide plate 15 when the light guide plate 15 is disposed in the housing 11.

The light guide plate 15 is opposite to the reflective layer 14 and disposed in the housing 11 for receiving the light emitted by the light-emitting devices 13, and bottom reflector 19 is disposed on the bottom of the light guide plate 15 for preventing from light leakage. The thermal conductive layer 16 is attached to the outer surface of the bottom of the housing 11, wherein one end of the thermal conductive layer 16 is formed a tassel portion 161, which is used for being attached to a bottom plate when the backlight module 1 with three-dimensional circuit structure is installed in a main frame of a liquid crystal display device.

Thus, the framework of the first embodiment of the backlight module with three-dimensional circuit structure has been clearly introduced. In the first embodiment of the backlight module with three-dimensional circuit structure, when the light-emitting devices 13 emit, the heat produced by the light-emitting devices 13 can be transferred to the housing 11 via the main body 121 of the three-dimensional circuit module 12, and furthermore, the heat can be dissipated through the housing 11 and the thermal conductive layer 16; Moreover, since the tassel portion 161 is attached to the bottom plate of the main frame, the heat can be further evenly distributed in the bottom plate.

Besides, what must be especially noted is that, the manufacturing material of the main body 121 can be metal, polyester film with high reflectivity, plastic, or fiberglass. If the manufacturing material of the main body 121 is metal, the concave holes of the main body 121 can be made by using electrochemical machining process, impact process, drilling and boring process, extrusion process, or drawing process; however, If the manufacturing material of the main body 121 is polyester film with high reflectivity, plastic, or fiberglass, the concave holes of the main body 121 can be made by using CNC cutting process, laser cutting process or injection molding process. Moreover, as shown in FIG. 4, when processing the concave holes 1212, a through hole 12121 is simultaneously formed on the bottom of each the concave hole 1212, adopted for desoldering the light-emitting device 13. Furthermore, after the through holes 12121 are respectively formed on the bottoms of the concave holes 1212, an insulating film (not shown in FIGs.) is formed on the bottom of each the concave hole 1212, used for covering the non-welding district on the bottom of the concave hole 1212.

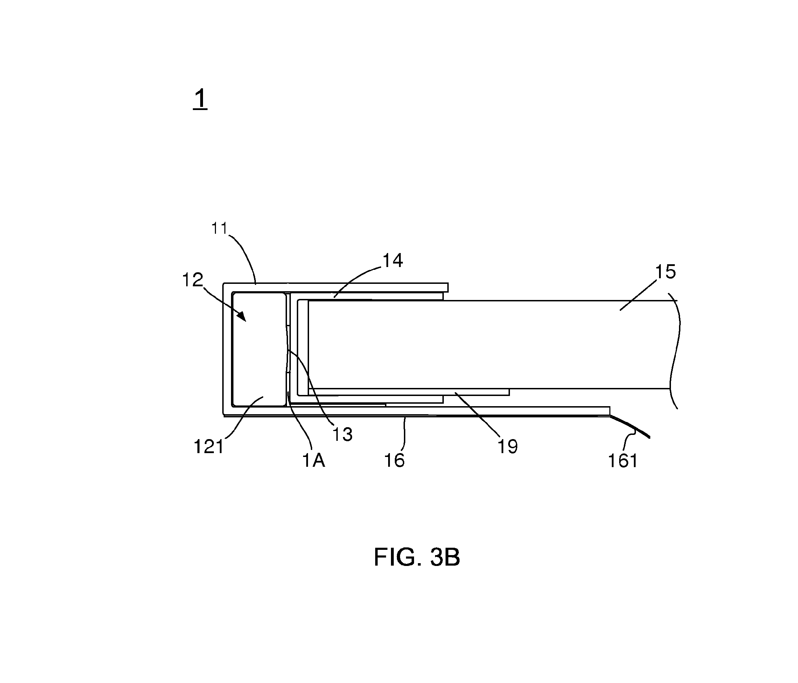

Please refer to FIG. 3B, which illustrates a second side view of the first embodiment of the backlight module with three-dimensional circuit structure. As swoon in FIG, 3B, for the first embodiment of the backlight module 1 with three-dimensional circuit structure, a second thermal conductive layer 1A need to be disposed between the three-dimensional circuit module 12 and the reflective layer 14 if the material of the main body 121 is polyester film, plastic and fiberglass. The second thermal conductive layer 14 is attached to the first surface 1211 of the main body 121 and the inner surface of the bottom of the housing 11, and includes a plurality of second holes (not shown in FIGs.) opposite to the holes 141 of the reflective layer 14; Therefore, when the light-emitting devices 13 emit, the heat produced by the light-emitting devices 13 can be transferred to the second thermal conductive layer 1A via the three-dimensional circuit layer 122, and then the heat can be further transferred to that housing 11 via the second thermal conductive layer 1A for being dissipated. Moreover, the second thermal conductive layer 1A can also be included into the FIG. 3A for being disposed between the three-dimensional circuit module 12 and the reflective layer 14, so that, the heat produced by the light-emitting devices 13 is able to be bi-directionally dissipated through the thermal conductive material 17 and the second thermal conductive layer 1A.

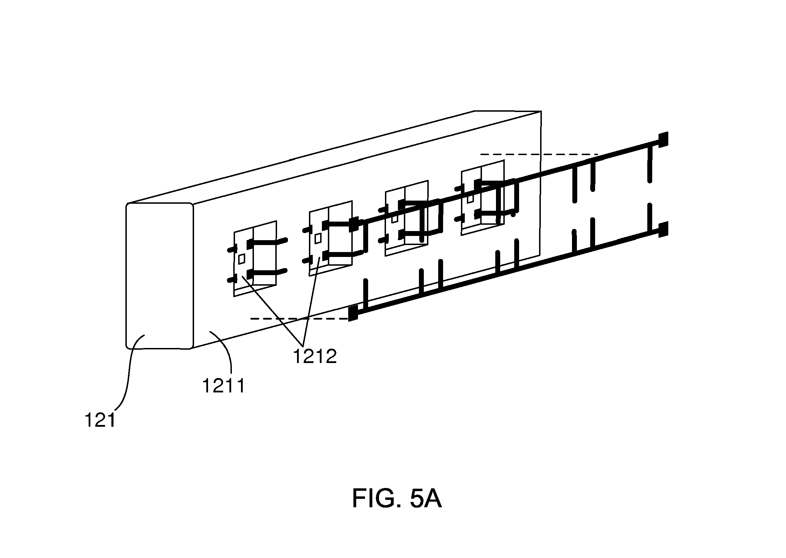

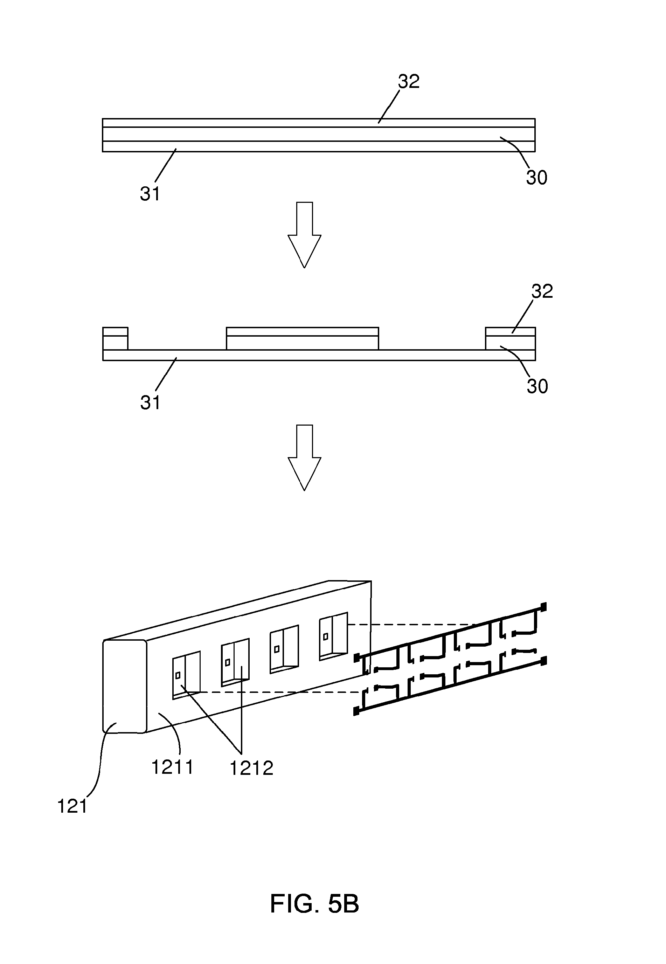

Moreover, please refer to FIG. 5A and FIG. 5B, there are shown schematic processing diagrams of forming the three-dimensional circuit layer on the main body of the three-dimensional circuit module. As shown in FIG. 5A and FIG. 5B, the three-dimensional circuit layer 122 can be disposed on the first surface 1211 of the main body 121, the side walls of the concave holes 1212 and the bottoms of the concave holes 1212 through the following three ways:

Way 1: As shown in FIG. 5A, to twice bend a plurality of foils and to attached the foils to the side walls of the concave holes 1212 and the bottoms of the concave holes 1212 via a heat-conductive insulating adhesive, respectively; then, disposing a metal circuit layer on the first surface 1211 of the main body 121 for connecting the foils.

Way 2: As shown in FIG. 5A, firstly, spraying the insulating films to the side walls of the concave holes 1212 and the bottoms of the concave holes 1212; then, twice bending a plurality of foils and attaching the foils to the side walls of the concave holes 1212 and the bottoms of the concave holes 1212; and then, disposing a metal circuit layer on the first surface 1211 of the main body 121 for connecting the foils.

Way 3: As shown in FIG. 5B, firstly, attaching a protection film 31 and a heat-conductive insulating adhesive 32 to the front side and the rear side of a foil 30; then, forming circuit patterns on the heat-conductive insulating adhesive 32 by way of lithography and etching; and then, using the protection film 31 as a centrifugal film and attaching the heat-conductive insulating adhesive 32 and the foil 30 to the first surface 1211 of the main body 121, the side walls of the concave holes 1212 and the bottoms of the concave holes 1212 by way of the centrifugal film.

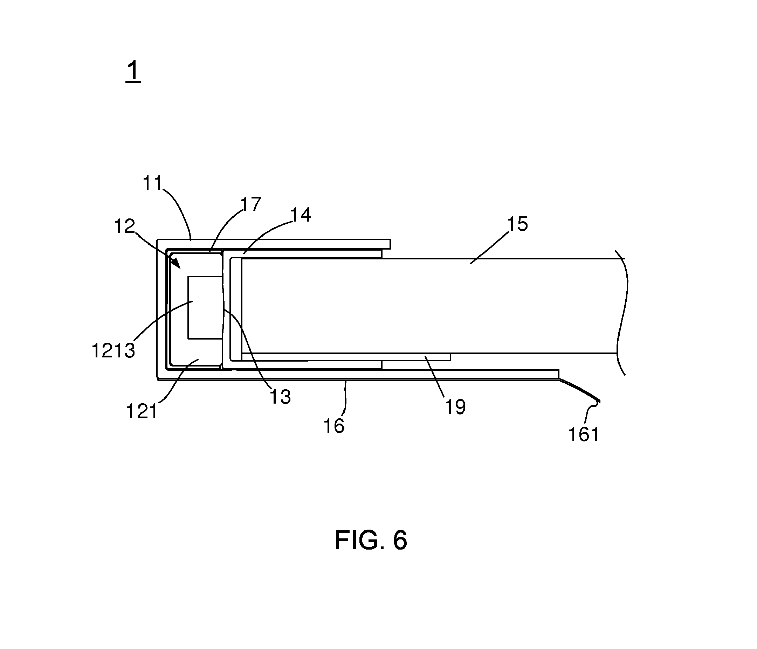

Please refer to FIG. 6, which illustrates a side view of a second embodiment of the backlight module with three-dimensional circuit structure according to the present invention. As shown in FIG. 6, the same to aforesaid first embodiment, the second embodiment of the backlight module 1 with three-dimensional circuit structure includes: the housing 11, the thermal conductive material 17, the three-dimensional circuit module 12, the plurality of light-emitting devices 13, the reflective layer 14, the light guide plate 15, the thermal conductive layer 16, and the bottom reflector 19. As shown in FIG. 3 and FIG. 6, the housing 11, the thermal conductive material 17, the three-dimensional circuit module 12, the plurality of light-emitting devices 13, the reflective layer 14, the light guide plate 15, the thermal conductive layer 16, and the bottom reflector 19 in the second embodiment of the backlight module 1 are the same to those in first second embodiment.

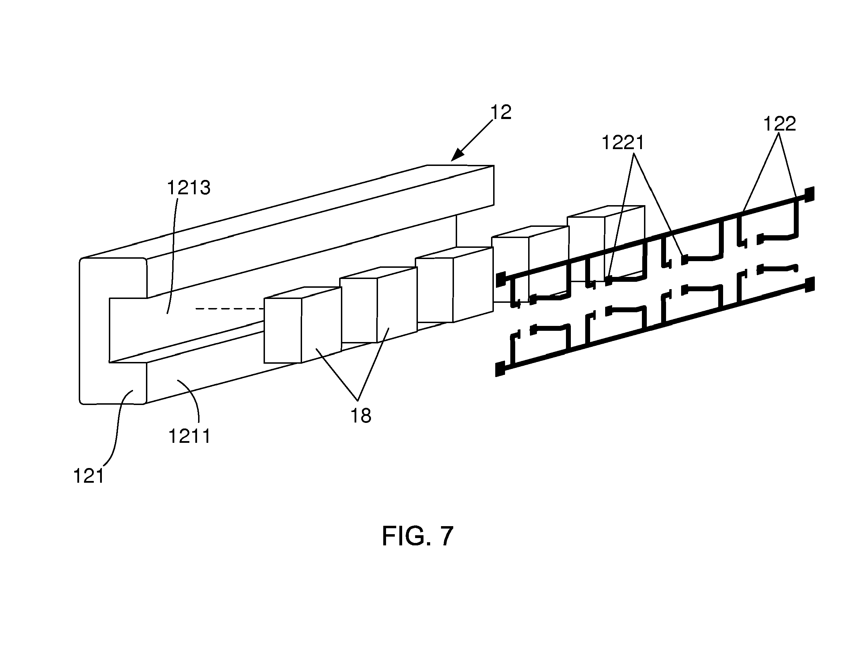

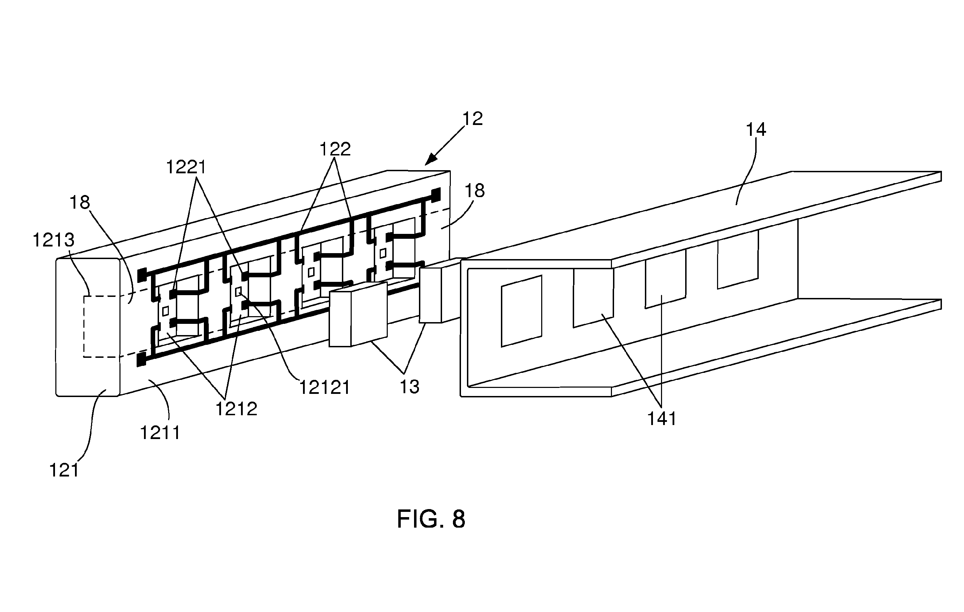

Referring to FIG. 6 again, and simultaneously referring to FIG. 7, which illustrates an exploded diagram of the three-dimensional circuit module of the second embodiment of the backlight module three-dimensional circuit structure; Moreover, please also refer to FIG. 8, which illustrates the stereo diagram of the three-dimensional circuit module, the plurality of light-emitting device and the reflective layer of the second embodiment of the backlight module with three-dimensional circuit structure. As shown in FIG. 7 and FIG. 8, similar to aforesaid first embodiment, in the second embodiment of the backlight module 1 with three-dimensional circuit structure, the three-dimensional circuit module 12 includes a main body 121 and a three-dimensional circuit layer 122; However, different from first embodiment, in the second embodiment of the backlight module 1, a groove 1213 is formed on a first surface 1211 of the main body 121, and a plurality of spacers 18 disposed in the groove 1213, wherein two adjacent spacers 18 in the groove 1213 form one concave hole 1212. The three-dimensional circuit layer 122 is also disposed on the first surface 1211 of the main body 121, the side walls of the concave holes 1212 and the bottoms of the concave holes 1212; in addition, the three-dimensional circuit layer 122 further has a plurality of welding points 1221 disposed on the bottoms of the concave holes 1212.

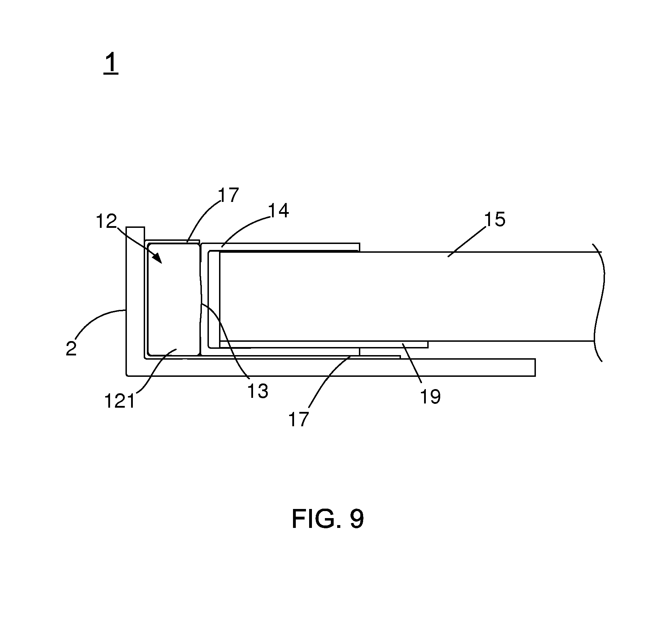

In the present invention, the backlight module with three-dimensional circuit structure further has a third embodiment. Please refer to FIG. 9, which illustrates a side view of the third embodiment of the backlight module with three-dimensional circuit structure according to the present invention. As shown in FIG. 9, the third embodiment of the backlight module 1 is different from the second embodiment and the first embodiment thereof, in the third embodiment of the backlight module 1, it merely includes a three-dimensional circuit module 12, a plurality of light-emitting devices 13, a reflective layer 14, a light guide plate 15, and a bottom reflector 19, wherein the three-dimensional circuit module 12 is used as the backlight module and capable of being directly disposed in the main frame of the liquid crystal display device.

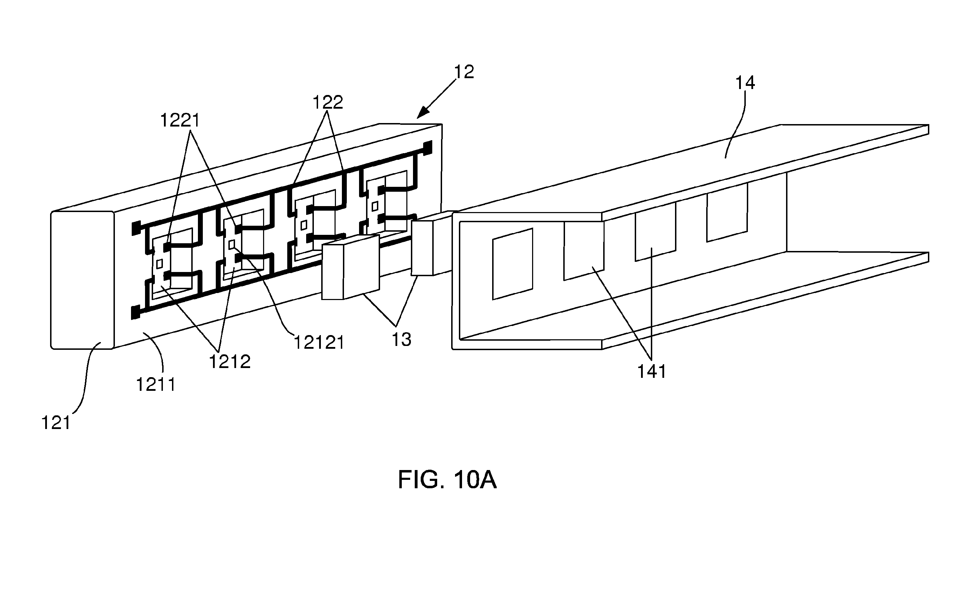

Continuously referring to FIG. 9, and simultaneously referring to FIG. 10A, which illustrates a first stereo diagram of the three-dimensional circuit module, the plurality of light-emitting device and the reflective layer of the third embodiment of the backlight module with three-dimensional circuit structure. As shown in FIG. 9 and FIG. 10A, it is similar to aforesaid first embodiment that the three-dimensional circuit module 12 in the third embodiment of the backlight module 1 includes a main body 121 and a three-dimensional circuit layer 122, wherein the material of the main body 121 is metal, and the main body 121 is disposed in a main frame 2 via a thermal conductive material 17; Moreover, the thermal conductive material 17 can be further extended to a bottom plate of the main frame 2, besides, the end of the thermal conductive material 17 extended to the bottom plate of the main frame 2 has a thermal conductive material tassel, adopted for tightly attaching to the bottom plate of the main frame 2. Furthermore, A plurality of concave holes 1212 are formed in a first surface 1211 of the main body 121, and three-dimensional circuit layer 122 is disposed on the first surface 1211 of the main body 121, the side walls of the concave holes 1212 and the bottom of the concave holes 1212; In addition, the thee-dimensional circuit layer 122 further has a plurality of welding points 1221 disposed on the bottoms of the concave holes 1212. Furthermore, the plurality of light-emitting devices 13 are respectively disposed in the concave holes 1212 by way of being welded on the welding points 1221.

Referring to FIG. 9 and FIG. 10A again, the reflective layer 14 is disposed in the housing 11 and has a plurality of holes 141, wherein the reflective layer 14 is opposite to the light-emitting devices 13, so that the light-emitting surfaces of the light-emitting devices 13 are able to be exposed out of the reflective layer 14 through the plurality of holes 141, respectively. The light guide plate 15 is opposite to the reflective layer 14 and disposed in the housing 11 for receiving the light emitted by the light-emitting devices 13, and the bottom reflector 19 is disposed on the bottom of the light guide plate 15 for preventing from light leakage. Moreover, when the light-emitting devices 13 emit, the head produced by the light-emitting devices 13 can be transferred to the main frame 2 for being dissipated through the main body 121 and the thermal conductive material 17; besides, the heat can also be evenly distributed in the bottom plate of the main frame 2 via the thermal conductive material 17.

Comparing the first embodiment of the backlight module 1 with the third embodiment thereof, in the third embodiment, the three-dimensional circuit module 12 is used as the backlight module and directly disposed in the main frame of the liquid crystal display device; However, in the first embodiment, the three-dimensional circuit module 12 is disposed in the housing 11, and then the housing 11 is disposed in the main frame.

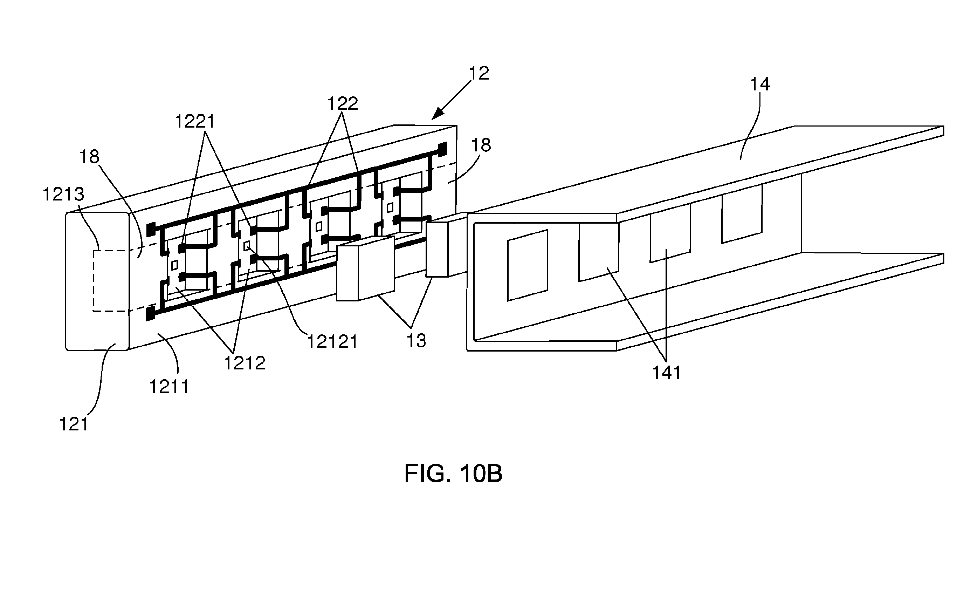

Please refer to FIG. 10B, which illustrates a second stereo diagram of the three-dimensional circuit module, the plurality of light-emitting device and the reflective layer of the third embodiment of the backlight module with three-dimensional circuit structure. As shown in FIG. 10B, for the third embodiment of the backlight module with three-dimensional circuit structure, a groove 1213 can be formed on the first surface 1211 of the main body 121 (similar to aforesaid second embodiment), and a plurality of spacers 18 can be disposed in the groove 1213, such that two adjacent spacers 18 in the groove 1213 form one concave hole 1212. Therefore, three-dimensional circuit layer 122 can be disposed on the first surface 1211 of the main body 121, the side walls of the concave holes 1212 and the bottoms of the concave holes 1212, and the three-dimensional circuit layer 122 disposed on the bottoms of the concave holes 1212 has a plurality of welding points 1221 used for soldering.

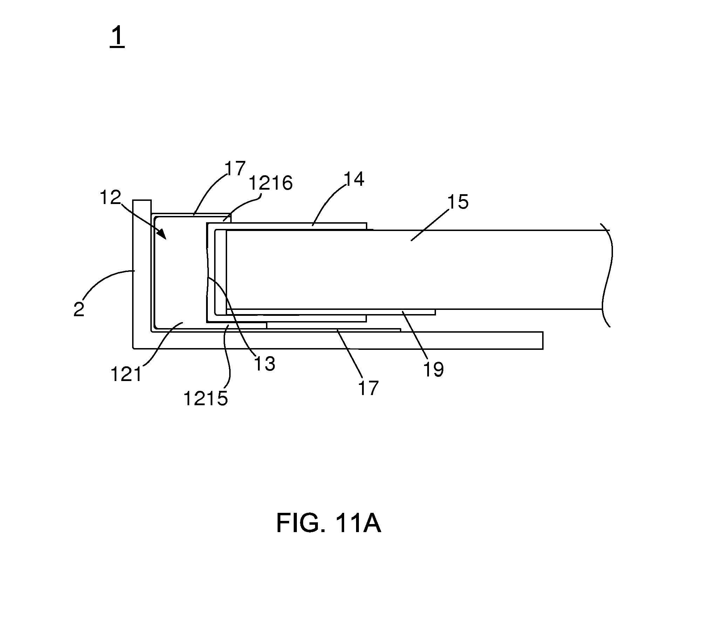

Furthermore, please refer to FIG. 11A, which illustrates a side view of a fourth embodiment of the backlight module with three-dimensional circuit structure according to the present invention. As shown in FIG. 11A, the fourth embodiment of the backlight module 1 with three-dimensional circuit structure also includes: the three-dimensional circuit module 12, the plurality of light-emitting devices 13, the reflective layer 14, the light guide plate 15, and the bottom reflector 19, wherein the three-dimensional circuit module 12, the plurality of light-emitting devices 13, the reflective layer 14, the light guide plate 15, and the bottom reflector 19 is the same to those in the aforesaid third embodiment.

However, different from the third embodiment, in the fourth embodiment of the backlight module with three-dimensional circuit structure, the main body 121 of the three-dimensional circuit module 12 further includes a long portion 1215 and a short portion 1216; in addition, as shown in FIG. 11A, an accommodating space is formed between the long portion 1215 and the short portion 1216, and the reflective layer 14 is accommodated by the accommodating space.

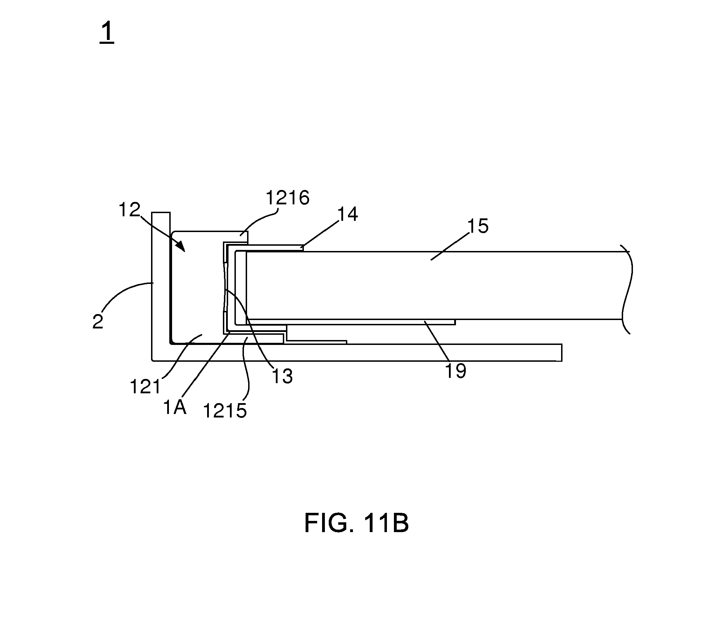

Please further referring to FIG. 11B, which illustrates a second side view of the fourth embodiment of the backlight module with three-dimensional circuit structure. As shown in FIG. 11B, in the fourth embodiment of the backlight module with three-dimensional circuit structure, if the manufacturing material of the main body 121 is plastic or fiberglass, the second thermal conductive layer 1A must be attached to the first surface 1211 of the main body 121 and extended to the main frame 2; Thus, when the light-emitting devices 13 emit, the heat produced by the light-emitting devices 13 can be transferred to the main frame 2 via the second thermal conductive layer 1A. Moreover, since the material of the main body 121 is not metal, the thermal conductive material 17 can be removed. It must to be noted that herein, the second thermal conductive layer 1A also can be included into the FIG. 9 for being disposed between the three-dimensional circuit module 12 and the reflective layer 14, so that, the heat produced by the light-emitting devices 13 is able to be bi-directionally dissipated through the thermal conductive material 17 and the second thermal conductive layer 1A.

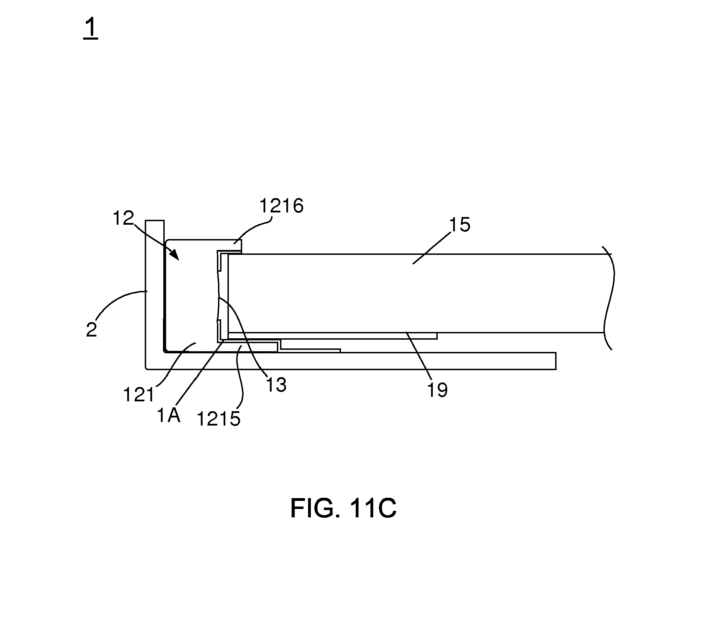

Finally, referring to FIG. 11C, which illustrates a third side view of the fourth embodiment of the backlight module with three-dimensional circuit structure. As shown in FIG. 11C, particularly, in the fourth embodiment of the backlight module 1 with three-dimensional circuit structure, if the manufacturing material of the main body 121 is polyester film, the reflective layer 14 and the thermal conductive material 17 can be removed, and the second thermal conductive layer 1A must be attached to the first surface 1211 of the main body 121 and the bottom of the housing 11 for assisting in heat dissipation. Moreover, one end of the second thermal conductive layer 1A shown in FIG. 11B and FIG. 11C is extended to the bottom plate of the main frame 2 and has a second thermal conductive layer tassel.

Thus, through the above descriptions, the backlight module with three-dimensional circuit structure of the present invention has been disclosed completely and clearly in the above description. In summary, the present invention has the following advantages:

1. By way of making the concave holes on the main body of the three-dimensional circuit module and disposing the three-dimensional layer on the surface of the main body, the side walls of the concave holes and the bottoms of the concave holes, the complete circuit can be disposed in the limit-sized main body, such that the backlight module with three-dimensional circuit structure can be applied to a thin liquid crystal display device.

2. Inheriting to above point 1, the three-dimensional circuit layer can be disposed on the first surface of the main body, the side walls of the concave holes and the bottoms of the concave holes through three ways.

3. For the third embodiment of the backlight module with three-dimensional circuit structure, the three-dimensional module can also be used as the backlight module, and be directly disposed in the main frame of the liquid crystal display device without using the housing.

4. Inheriting to above point 1, to dispose the light-emitting devices in the concave holes can also fix the light-emitting devices and prevent the light-emitting devices from displacement.

The above description is made on embodiments of the present invention. However, the embodiments are not intended to limit scope of the present invention, and all equivalent implementations or alterations within the spirit of the present invention still fall within the scope of the present invention.

## Claims

1. A backlight module with three-dimensional circuit structure, comprising:
a housing;
a thermal conductive material, being disposed on the inner surface of the housing;
a three-dimensional circuit module, being disposed in the housing via the thermal conductive material and comprising:
a main body, having a plurality of concave holes formed in a first surface thereof; and
a three-dimensional circuit layer, being disposed on the first surface of the main body, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the housing, used for receiving the light emitted by the light-emitting devices; and
a thermal conductive layer, being attached to the outer surface of the bottom of the housing;
wherein when the light-emitting devices emit, the heat produced by the light-emitting devices can be transferred to the housing via the main body of the three-dimensional circuit module, and furthermore, the heat can be dissipated through the housing and the thermal conductive layer.

2. The backlight module with three-dimensional circuit structure of Claim 1, further comprising a bottom reflector, being disposed on the bottom of the light guide plate for preventing from light leakage.

3. The backlight module with three-dimensional circuit structure of Claim 1, wherein the material of the main body is selected from the group consisting of: metal, polyester film with high reflectivity, plastic, and fiberglass.

4. The backlight module with three-dimensional circuit structure of Claim 3, wherein the concave holes of the main body is made by using a processing method selected from the group consisting of: electrochemical machining process, impact process, drilling and boring process, extrusion process, drawing process, and injection molding process.

5. The backlight module with three-dimensional circuit structure of Claim 1, wherein a through hole is formed on the bottom of the plurality of concave holes, respectively, adopted for desoldering the light-emitting devices.

6. The backlight module with three-dimensional circuit structure of Claim 1, wherein a plurality of insulating films are formed on the bottoms of the plurality of concave holes, the insulating film is used for covering the non-welding district on the bottom of the concave hole.

7. A backlight module with three-dimensional circuit structure, comprising:
a housing;
a thermal conductive material, being disposed on the inner surface of the housing;
a three-dimensional circuit module, being disposed in the housing via the thermal conductive material and comprising:
a main body, having a groove formed on a first surface thereof and a plurality of spacers disposed in the groove, wherein two adjacent spacers in the groove form one concave hole; and
a three-dimensional circuit layer, being disposed on the first surface of the main body, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the housing and having a plurality of holes, wherein the reflective layer is opposite to the light-emitting devices, so that the light-emitting surfaces of the light-emitting devices are able to be exposed out of the reflective layer through the plurality of holes, respectively;
a light guide plate, being opposite to the reflective layer and disposed in the housing, used for receiving the light emitted by the light-emitting devices; and
a thermal conductive layer, being attached to the outer surface of the bottom of the housing;
wherein when the light-emitting devices emit, the heat produced by the light-emitting devices can be transferred to the housing via the main body of the three-dimensional circuit module, and furthermore, the heat can be dissipated through the housing and the thermal conductive layer.

8. The backlight module with three-dimensional circuit structure of Claim 7, further comprising a bottom reflector, being disposed on the bottom of the light guide plate for preventing from light leakage.

9. The backlight module with three-dimensional circuit structure of Claim 7, wherein the material of the main body is selected from the group consisting of: metal, polyester film with high reflectivity, plastic, and fiberglass.

10. The backlight module with three-dimensional circuit structure of Claim 9, wherein the concave holes of the main body is made by using a processing method selected from the group consisting of: electrochemical machining process, impact process, drilling and boring process, extrusion process, drawing process, and injection molding process.

11. The backlight module with three-dimensional circuit structure of Claim 7, wherein a through hole is formed on the bottom of the plurality of concave holes, respectively, adopted for desoldering the light-emitting devices.

12. The backlight module with three-dimensional circuit structure of Claim 7, wherein a plurality of insulating films are formed on the bottoms of the plurality of concave holes, the insulating film is used for covering the non-welding district on the bottom of the concave hole.

13. A backlight module with three-dimensional circuit structure, comprising:
a three-dimensional circuit module, capable of being directly disposed in a main frame of a liquid crystal display device, and comprising:
a main body, having a plurality of concave holes formed in a first surface thereof; and
a three-dimensional circuit layer, being disposed on the first surface of the main body, the side walls of the concave holes and the bottom of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the housing and having a plurality of holes, wherein the reflective layer is opposite to the light-emitting devices, so that the light-emitting surfaces of the light-emitting devices are able to be exposed out of the reflective layer through the plurality of holes, respectively; and
a light guide plate, being opposite to the reflective layer and disposed in the housing, used for receiving the light emitted by the light-emitting devices.

14. The backlight module with three-dimensional circuit structure of Claim 13, further comprising a bottom reflector, being disposed on the bottom of the light guide plate for preventing from light leakage.

15. The backlight module with three-dimensional circuit structure of Claim 13, wherein the material of the main body is selected from the group consisting of: metal, polyester film with high reflectivity, plastic, and fiberglass.

16. The backlight module with three-dimensional circuit structure of Claim 15, wherein the concave holes of the main body is made by using a processing method selected from the group consisting of: electrochemical machining process, impact process, drilling and boring process, extrusion process, drawing process, and injection molding process.

17. The backlight module with three-dimensional circuit structure of Claim 13, wherein a through hole is formed on the bottom of the plurality of concave holes, respectively, adopted for desoldering the light-emitting devices.

18. The backlight module with three-dimensional circuit structure of Claim 13, wherein a plurality of insulating films are formed on the bottoms of the plurality of concave holes, the insulating film is used for covering the non-welding district on the bottom of the concave hole.

19. The backlight module with three-dimensional circuit structure of Claim 13, wherein the main body further comprises a long portion and a short portion, and an accommodating space being formed between the long portion and the short portion.

20. The backlight module with three-dimensional circuit structure of Claim 15, wherein the metal is used as the material of the main body, a thermal conductive material is able to be disposed between the main body and the main frame for assisting in heat dissipation, moreover, the thermal conductive material can be further extended to a bottom plate of the main frame, so as to transfer the heat to the bottom plate for evenly distribute the heat in the bottom plate.

21. A backlight module with three-dimensional circuit structure, comprising:
a three-dimensional circuit module, capable of being directly disposed in a main frame of a liquid crystal display device, and comprising:
a main body, having a groove formed on a first surface thereof and a plurality of spacers disposed in the groove, wherein two adjacent spacers in the groove form one concave hole; and
a three-dimensional circuit layer, being disposed on the first surface of the main body, the side walls of the concave holes and the bottoms of the concave holes, moreover, the three-dimensional circuit layer further having a plurality of welding points disposed on the bottoms of the concave holes;
a plurality of light-emitting devices, being respectively disposed in the concave holes by way of being welded on the welding points;
a reflective layer, being disposed in the housing and having a plurality of holes, wherein the reflective layer is opposite to the light-emitting devices, so that the light-emitting surfaces of the light-emitting devices are able to be exposed out of the reflective layer through the plurality of holes, respectively; and
a light guide plate, being opposite to the reflective layer and disposed in the housing, used for receiving the light emitted by the light-emitting devices.

22. The backlight module with three-dimensional circuit structure of Claim 21, further comprising a bottom reflector, being disposed on the bottom of the light guide plate for preventing from light leakage.

23. The backlight module with three-dimensional circuit structure of Claim 21, wherein the material of the main body is selected from the group consisting of: metal, polyester film with high reflectivity, plastic, and fiberglass.

24. The backlight module with three-dimensional circuit structure of Claim 23, wherein the concave holes of the main body is made by using a processing method selected from the group consisting of: electrochemical machining process, impact process, drilling and boring process, extrusion process, drawing process, and injection molding process.

25. The backlight module with three-dimensional circuit structure of Claim 21, wherein a through hole is formed on the bottom of the plurality of concave holes, respectively, adopted for desoldering the light-emitting devices.

26. The backlight module with three-dimensional circuit structure of Claim 21, wherein a plurality of insulating films are formed on the bottoms of the plurality of concave holes, the insulating film is used for covering the non-welding district on the bottom of the concave hole.

27. The backlight module with three-dimensional circuit structure of Claim 21, wherein the main body further comprises a long portion and a short portion, and an accommodating space being formed between the long portion and the short portion.

28. The backlight module with three-dimensional circuit structure of Claim 23, wherein the metal is used as the material of the main body, a thermal conductive material is able to be disposed between the main body and the main frame for assisting in heat dissipation, moreover, the thermal conductive material can be further extended to a bottom plate of the main frame, so as to transfer the heat to the bottom plate for evenly distribute the heat in the bottom plate.
